Europäisches Patentamt

European Patent Office

Office européen des brevets

(19)

(11) Numéro de publication: **0 275 739 B1**

## (12) FASCICULE DE BREVET EUROPEEN

(45) Date de publication de fascicule du brevet:
**16.10.91**

(21) Numéro de dépôt: **87402812.9**

(22) Date de dépôt: **11.12.87**

(51) Int. Cl.⁵: **G01F 15/06**, G06M 3/06,
G06K 19/06

(54) **Dispositif pour l'analyse en continu du débit d'un fluide et procédé pour sa mise en oeuvre.**

(30) Priorité: **18.12.86 FR 8617717**

(43) Date de publication de la demande:
**27.07.88 Bulletin 88/30**

(45) Mention de la délivrance du brevet:
**16.10.91 Bulletin 91/42**

(84) Etats contractants désignés:
**BE CH DE ES GB IT LI LU NL**

(56) Documents cités:
**EP-A- 0 199 051
FR-A- 1 127 633
GB-A- 2 159 495
US-A- 4 523 460**

**CONTROL & INSTRUMENTATION, vol. 5, no.
1, January 1973, pages 42-43; J. WENK et al.:
"Speeding data acquisition for metering liquids"**

(73) Titulaire: **COMPAGNIE GENERALE DES EAUX
SA dite:
52 rue d'Anjou
F-75384 Paris Cedex 08(FR)**

(72) Inventeur: **Jouttier, Jacques
rue de la Gaubardière
F-45400 Semoy(FR)**

(74) Mandataire: **Cuer, André et al
Cabinet Ballot-Schmit 7, rue Le Sueur
F-75116 Paris(FR)**

Rank Xerox (UK) Business Services

## Description

La présente invention concerne un dispositif pour l'analyse en continu du débit d'un fluide, ainsi qu'un procédé pour l'utilisation de ce dispositif.

On sait que les exploitants de réseaux d'eau, de chaleur et d'assainissement, pour une saine gestion de leurs installations,ont le plus grand besoin d'informations statistiques sur les quantités débitées et sur leurs variations en fonction du temps. L'analyse de ces données permet entre autres :
- Sur les réseaux de distribution d'eau potable : de déceler les débits de fuite pendant les heures de faible consommation, de connaître la valeur des pointes de consommation afin de pouvoir optimaliser la production, et de signaler tout débit excessif pouvant avoir pour cause une rupture d'une canalisation maîtresse ;
- Sur les réseaux d'assainissement : d'apprécier l'échelle des débits du fluide qui passe par un poste de relèvement et, plus particulièrement, de connaître les taux de dilution par temps de pluie ;
- Sur une alimentation en eau industrielle : de surveiller les pointes de consommation ;
- Sur un réseau de distribution d'eau chaude sanitaire : de suivre l'évolution des consommations afin de déceler tout début d'erreur de mesure par le compteur de livraison ; et :
- Sur un réseau de chaleur : de surveiller les consommations d'énergie thermique pour vérifier si elles restent compatibles avec les puissances souscrites par les abonnés.

Il est donc aisé de comprendre l'importance des analyses en continu des débits de fluides pour de telles installations, et, compte tenu de la lourdeur et de l'inadaptation des équipements existants, un but de l'invention est de proposer, avec son procédé d'utilisation, un équipement portable et autonome de saisie, de traitement et de mémorisation des signaux délivrés par un organe mesureur ou de transfert de fluides, équipement qui est destiné notamment à fournir un échantillonage caractéristique des débits, le relevé des volumes et la chronologie des valeurs de crête mesurées.

Un autre but de l'invention est de fournir un dispositif de ce type dont la consommation d'énergie soit très faible, ce qui lui confère une large autonomie, et qui soit peu coûteux, robuste et d'utilisation facile, même pour un opérateur qui n'est pas technicien.

Selon l'invention, ces buts, et d'autres qui apparaîtront par la suite, sont atteints grâce à un dispositif d'analyse en continu du débit de fluide, faisant appel à un compteur à tête émettrice fournissant des signaux représentatifs à chaque instant de ce débit (comme par exemple dans le brevet FR-A 1127633) mais comportant les caractéristiques principales selon la revendication 1 qui suit la présente description.

Avantageusement, l'analyseur portable proprement dit comprend une unité centrale de traitement à microprocesseur à laquelle sont reliées une mémoire de programme et une mémoire vive d'enregistrement des données, ainsi qu'au moins une entrée et au moins une sortie, et, si on le souhaite, un organe d'affichage.

On comprend qu'il est ainsi possible d'installer l'analyseur portable et autonome sur le site où il s'agit de mesurer des débits, de le brancher sur le compteur et de le laisser sur place pendant une durée plus ou moins longue, qui peut être d'une semaine par exemple, puis, à l'expiration de cette durée, de revenir sur le site pour le débrancher, de l'emporter vers un autre endroit, éventuellement fort éloigné, pour le raccorder à un ordinateur qui, s'il est pourvu du logiciel correspondant, se charge de l'analyse, de l'exploitation et de l'impression des données recueillies sur le site.

De préférence, chacune des entrées est choisie dans le groupe qui comprend les entrées pour les signaux impulsionnels rapides provenant de compteurs à lecture stroboscopique, les entrées pour les signaux impulsionnels lents provenant de compteurs à commande par aimant et ampoule de Reed, les entrées pour les signaux par "tout ou rien", et les entrées pour les signaux analogiques. Il peut y avoir, en particulier, une entrée pour les signaux impulsionnels rapides et une entrée pour les signaux impulsionnels lents qui sont reliées entre elles par un diviseur de fréquence. Ainsi, le dispositif selon l'invention peut s'adapter sans montage supplémentaire aux divers types de signaux provenant du compteur.

Quant aux sorties, outre celles qui sont normalement raccordées à l'ordinateur d'exploitation des données, elles peuvent comprendre une sortie pour la commutation d'une source de courant extérieure, cette sortie étant reliée par des bascules adressables à l'unité centrale de traitement.

Enfin, l'analyseur portable de l'invention peut avantageusement comprendre une horloge d'exploration des entrées.

Ainsi que cela a déjà été indiqué plus haut, le dispositif selon l'invention est mis en oeuvre au moyen d'une pluralité de phases au cours desquelles, successivement, on raccorde, sur le site, l'analyseur portable et amovible au compteur à tête émettrice, on le débranche à l'expiration d'une durée prédéterminée d'analyse du débit, et on le transporte jusqu'à un poste d'exploitation des données où on le raccorde à un ordinateur.

La description qui va suivre, et qui ne présente aucun caractère limitatif, permettra de bien comprendre comment la présente invention peut être mise en pratique. Elle doit être lue en regard des dessins annexés, parmi lesquels :

- La figure 1 représente de manière très schématique l'utilisation de l'analyseur portable selon l'invention, sur le site, d'une part, et, d'autre part, lors de l'exploitation des données qu'il a enregistrées ; et :
- La figure 2 montre sous la forme d'un schéma par blocs l'analyseur portable du dispositif selon l'invention.

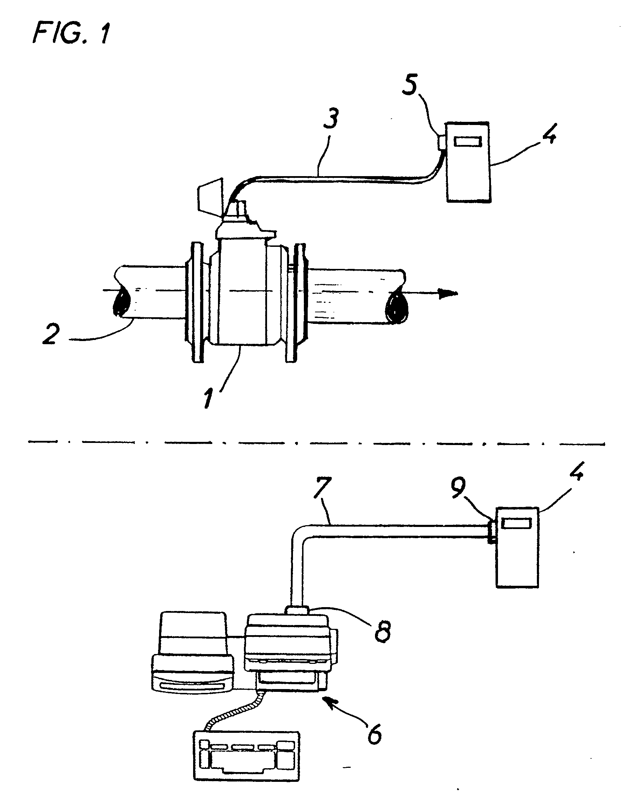

Comme on le voit sur la partie supérieure de la figure 1, un compteur 1 à tête émettrice est monté sur une canalisation 2 traversée par un fluide dont il s'agit d'analyser le débit. Ce compteur 1 peut être relié par une ligne conductrice 3 à l'analyseur portable proprement dit qui est désigné dans son ensemble par le repère 4, et ce, au moyen d'un connecteur amovible classique 5.

Lorsque l'analyseur portable 4 est déconnecté de la ligne conductrice 3, il est possible de le transporter aussi loin qu'on le souhaite, jusqu'au voisinage du poste de travail 6 d'un micro-ordinateur (voir la partie inférieure de la figure 1), et de le raccorder à ce dernier de manière amovible au moyen d'une ligne conductrice 7 et de ses connecteurs d'extrémité 8 et 9. Les données emmagasinées par l'analyseur portable 4 peuvent alors être traitées par le micro-ordinateur 6 et, après initialisation, on peut utiliser à nouveau l'analyseur 4 sur le site, de la manière qui a été décrite plus haut.

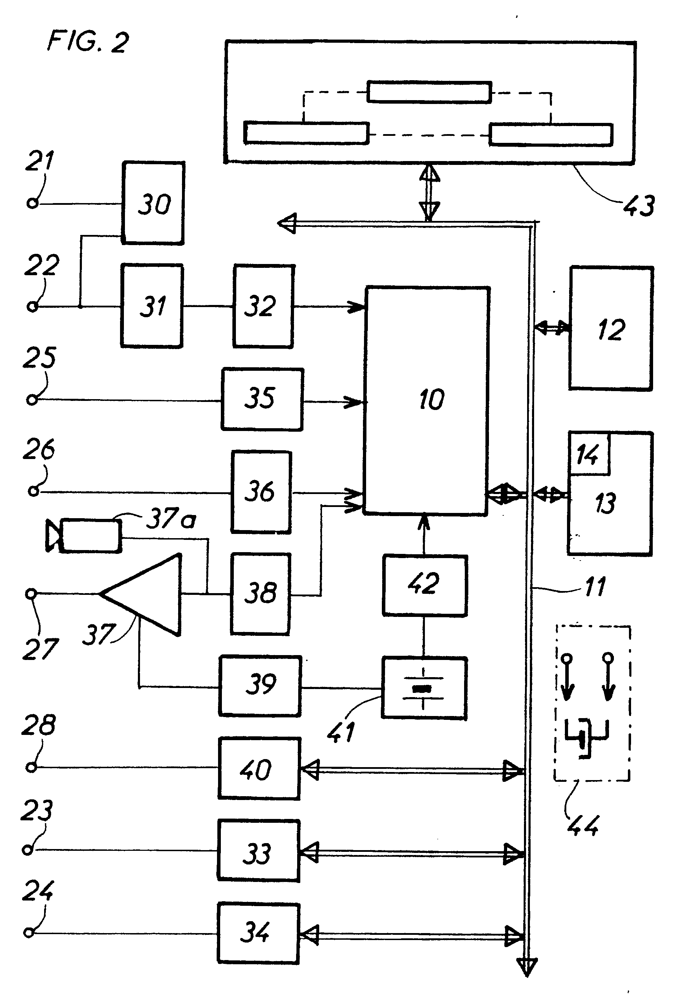

Comme on le voit sur la figure 2, l'analyseur portable 4 proprement dit est organisé autour d'une unité centrale de traitement 10 dont le choix et la réalisation sont à la portée de l'homme de l'art et qui, en conséquence, ne sera pas décrite ici de manière détaillée. Cette unité 10 est reliée, de manière classique, à une barre collectrice de données et d'adresses 11, ou "bus", à laquelle sont raccordées une mémoire 12 chargée d'emmagasiner le programme de l'analyseur portable, et une mémoire vive ou "RAM" (Random Access Memory) 13 qui comprend un tampon ou "buffer" 14 et qui reçoit les données fournies par le compteur 1. A titre indicatif, la mémoire de programme 12 peut présenter une capacité de 4 kilo-octets et la mémoire vive 13 une capacité de 2 kilo-octets. En outre, l'unité centrale de traitement 10 est reliée, du moins indirectement, à quatre entrées ou bornes 21 à 24 et à quatre sorties 25 à 28, ainsi que cela va être expliqué maintenant.

L'entrée 21 est destinée au raccordement à une tête émettrice de compteur à lecture stroboscopique dont le signal impulsionnel est rapide, sa fréquence étant comprise entre 30 et 200 Hz environ. Au contraire, l'entrée 22 est adaptée aux têtes émettrices ou répétiteurs d'impulsions à dispositif de commande par aimant et ampoule de Reed dont le signal impulsionnel est plus lent, sa fréquence allant d'une impulsion en 30 minutes jusqu'à 30 Hz. L'entrée 21 est reliée par un diviseur 30 au dizième qui ramène les signaux rapides dans la gamme de fréquences des signaux lents, à l'entrée 22 de ces derniers, cette entrée 22 étant reliée à son tour à l'unité centrale de traitement 10 à travers un filtre passe-bas d'entrée 31 et une bascule 32.

L'entrée 23 est destinée à recevoir un signal "tout ou rien" de changement d'état qui traduit, par exemple, l'état de marche ou d'arrêt d'une pompe de relevage des eaux usées et qui permet, en introduisant le débit nominal de cette pompe, de déterminer l'échelonnement des volumes de fluide passant par un réseau d'assainissement. Cette entrée 23 est reliée à l'unité centrale de traitement 10 par un tampon 33 ou "buffer" pouvant débiter trois états de sortie.

Quant à l'entrée 24, elle peut recevoir un signal analogique allant par exemple de 4 à 20 mA, lorsque le compteur 1 débite un courant de mesure dans une résistance calibrée ; ce courant est converti en une tension allant de 2,5 à 12,5 V. et échantillonné après passage dans un convertisseur analogique/numérique 34 pour arriver à l'unité centrale 10 à travers le "bus" 11.

En ce qui concerne maintenant les sorties, elles sont de deux types qui correspondent respectivement aux bornes 25 à 27 et à la borne 28.

Les bornes 25 à 27 sont destinées à être raccordées par la ligne connectrice 7 (figure 1) au microordinateur 6. Elles sont raccordées à l'unité centrale 10 par un organe d'initialisation 35 pour la première, par un adaptateur d'entrée 36 pour la deuxième et, pour la troisième, par un amplificateur 37 et un adaptateur de sortie 38, un bruiteur 37a pouvant être monté entre ces deux derniers organes. L'amplificateur 37 est alimenté par un élévateur/inverseur de tension 39 qui est raccordé à l'unité centrale de traitement 10 par une horloge constituée par un quartz 41 dont la fréquence est, par exemple, égale à 32,768kHz, cette fréquence étant ensuite divisée par un facteur $2^{10}$ en 42 pour fournir à l'unité centrale 10 une fréquence effective égale à 32 Hz environ. Ainsi, les sorties 25 à 27 permettent l'initialisation de l'analyseur portable lors des opérations de mise à l'heure, l'entrée du poids des impulsions et le transfert des données emmagasinées dans la mémoire vive 13.

Pour sa part, la sortie 28 est destinée à la commutation d'un courant extérieur et elle permet de délivrer deux informations de seuil à partir des paramètres entrés en données. Elle est reliée à l'unité centrale de traitement 10 à travers des bascules adressables 40 et le "bus" 11.

Enfin, un afficheur à deux lignes 43 peut être raccordé au "bus" 11 pour visualiser les résultats des mesures du compteur 6, et l'ensemble est alimenté par une pile qui est schématisée en 44 et qui peut être une pile alcaline de 9 Volts.

Le mode de fonctionnement du dispositif qui vient d'être décrit est à la portée de l'homme de l'art, et il ne sera donc pas étudié ici de manière détaillée. On se contentera, dans ce qui suit, de préciser quelques points particuliers de ce mode de fonctionnement.

Dans une forme de réalisation avantageuse, l'unité centrale de traitement 10 comprend un microprocesseur 1802 de la Société RCA et les composants, réduits au nombre minimal, sont du type CMOS, ce qui constitue un facteur de faible consommation d'énergie.

D'autre part, le logiciel emmagasiné dans la mémoire de programme 12 est écrit en assembleur ; il est d'une structure multi-tâches, et il gère simultanément les fonctions prioritaires d'incrémentation d'horloge et de lecture de l'état d'entrée, ainsi que les fonctions de traitement des données et de chargement de la mémoire vive 13.

La fréquence d'exploration des entrées 21/24 est de 32 Hz, soit une période égale à 31,25 millisecondes. Chaque front de changement d'état est mémorisé pour un traitement dans la période, et, si la fréquence d'entrée impulsionnelle excède 0,25 Hz, les informations sont cumulées sur une période de 4 à 8 secondes pour être traitées en moyenne arithmétique, la précision ainsi obtenue étant supérieure à 1% sur toute la gamme de mesure.

L' afficheur 43 exprime la mesure directement dans l'unité choisie lors de l'initialisation, après un calcul de conversion de la forme :

$$Q\ (m^3/h)\ =\ \frac{n\ \times\ P\ \times\ 3,6}{T\ \times\ 31,25\ \times\ 10^{-3}}\ ,$$

où n est le nombre d'impulsions dans l'intervalle de temps T P, le volume délivré en litres pour une impulsion et T le temps correspondant à n impulsions (l'unité de T étant de 31,25 millisecondes).

Le nombre de chiffres significatifs est volontairement limité à quatre pour faciliter la lecture, et la virgule vient se placer automatiquement. Ces mesures apparaissent cycliquement sur l'afficheur alpha-numérique 43 à deux lignes, la première ligne indiquant la nature de la mesure, à savoir : "Debit minimum", "Débit maximum" ou "Débit instantané", cependant que la seconde exprime la valeur de la mesure et l'unité utilisée, comme par exemple : "31250 l/h" ou "31,25 m³/h".

Le dispositif selon l'invention qui vient d'être décrit a volontairement été conçu sans organe de commutation en façade, ce qui veut dire qu'il ne comporte aucun clavier de choix de fonction ou de gamme, et ce, afin de faciliter sa mise en oeuvre par un opérateur non technicien. Il se comporte comme un module péri-informatique en utilisant toute la puissance de calcul et de traitement qu'autorise l'ordinateur avec son clavier et son imprimante.

Non seulement les buts de la présente invention, tels qu'ils ont été exposés au début, sont très largement atteints grâce à l'analyseur portable décrit ci-dessus, mais encore ce dispositif présente d'autres avantages qui seront précisés ci-après.

Pour les buts de l'invention, on répétera que la consommation d'énergie est ici très faible, puisqu'elle est de 200 μA en l'absence de l'afficheur 43 et de 1,4 mA en sa présence, de sorte que la durée de vie d'une pile alcaline de 9 Volts est de plus de six mois dans le premier cas et de quinze jours dans le second. En outre, l'appareil est autonome sur le site et lorsqu'il est relié à l'ordinateur, grâce à son élévateur de tension 39 qui fournit la tension de ± 12 Volts pour la sortie 27 à partir d'une tension de 0/5 Volts. Enfin, la mise en service du convertisseur de tension a lieu automatiquement par le branchement du câble 7 de l'ordinateur (voir figure 1), ce qui assure la double fonction d'élévation et d'inversion de la tension.

Quant aux autres avantages, on indiquera que l'encombrement de l'analyseur portable de l'invention est très faible, puisqu'il ne dépasse pas celui d'une calculette, alors que sa capacité de mémoire est importante, puisqu'elle permet de stocker l'historique d'une semaine de débit de fluide, soit 532 informations.

On citera encore, comme avantages, une échelle des débits importante, grâce à un large spectre de fréquence des signaux d'entrée et à un échelon de résolution des impulsions de 0,5 cl à 20m³, et une immunité aux parasites due aux adaptateurs d'entrée. En outre, l'appareil admet, sans surconsommation ni risque de détérioration, que son entrée soit maintenue fermée pendant une période prolongée.

En résumé, l'appareil selon l'invention est spécifiquement adapté aux besoins des sociétés d'exploitation des réseaux publics d'eau, de chauffage et d'assainissement. Sa grande simplicité conduit à un coût très faible, cependant que sa robustesse et sa facilité d'utilisation permettent de le confier à un opérateur qui n'est pas technicien.

**Revendications**

1. Dispositif pour l'analyse en continu du débit d'un fluide à partir d'un compteur (1) à tête émettrice fournissant des signaux représentatifs à chaque instant de ce débit, caractérisé par le fait qu' il comprend un analyseur (4) de ce débit de fluide qui est portable et autonome et qui est muni d'une unité centrale de traitement à microprocesseur (10) à laquelle sont reliées une mémoire de programme (12) et une mémoire vive (13) pour enregistrer les données fournies par ledit compteur (1), une ligne conductrice (3) pour relier de manière amovible ledit compteur (1) à une entrée au moins (21 à 24) dudit analyseur (4), un ordinateur (6) qui est destiné à exploiter les données contenues dans ladite mémoire vive (13) et qui est situé en un endroit éloigné dudit compteur (1), et une ligne conductrice (7, 8, 9) pour relier de manière amovible ledit ordinateur (6) à une sortie au moins (25 à 28) dudit analyseur (4).

2. Dispositif selon la revendication 1, caractérisé par le fait que ledit analyseur (4) comprend en outre au moins un organe d'affichage (43).

3. Dispositif selon l'une quelconque des revendications 1 et 2, caractérisé par le fait que chacune desdites entrées (21 à 24) est choisie dans le groupe qui comprend les entrées (21) pour signaux impulsionnels rapides provenant de compteurs à lecture stroboscopique, les entrées (22) pour signaux impulsionnels lents provenant de compteurs à commande par aimant et ampoule de Reed, les entrées pour signaux par "tout ou rien", et les entrées pour signaux analogiques.

4. Dispositif selon la revendication 3, caractérisé par le fait qu'il comprend une entrée (21) pour signaux impulsionnels rapides et une entrée (22) pour signaux impulsionnels lents reliées entre elles par un diviseur de fréquence (30).

5. Dispositif selon l'une quelconque des revendications 1 à 4, caractérisé par le fait qu'il comprend une sortie (28) pour la commutation d'une source de courant extérieure, cette sortie étant reliée par des bascules adressables (40) à l'unité centrale de traitement (10).

6. Dispositif selon l'une quelconque des revendications 1 à 5, caractérisé par le fait qu'il comprend une horloge (41, 42) d'exploration des entrées.

7. Procédé pour la mise en oeuvre du dispositif selon l'une quelconque des revendications 1 à 6, caractérisé par le fait que l'on raccorde, sur le site, l'analyseur portable et amovible (4) audit compteur (1) à tête émettrice, qu'on le débranche à l'expiration d'une durée prédéterminée d'analyse du débit, et qu'on le transporte jusqu'à un poste d'exploitation où on le raccorde à un micro-ordinateur (6).

**Claims**

1. Device for the continuous analysis of a fluid flow rate from a meter (1) with a transmitter head giving representative signals at every moment of this flow rate, characterised in that it comprises : a portable and self-contained analyser of this fluid flow rate, which is provided with a central processing unit with microprocessor (10) to which are connected a programme memory (12) and a read-write memory (13) to memorise the data given by the said meter (1) ; a conducting line (3) to removably connect said meter (1) to at least one inlet (21-24) of said analyser (4) ; a computer (6) for processing the data contained in said read-write memory (13) and which is located at a distance from said meter (1) ; and a conducting line (7,8,9) to removably connect said computer (6) to at least one outlet (25-28) of said analyser (4).

2. Device according to claim 1, characterised in that said analyser (4) also comprises at least one visual indicator (43).

3. Device according to claim 1 or 2, characterised in that each of said inlets (21-24) is selected from the group consisting of : inlets (21) for rapid pulsing signals coming from stroboscopic reading counters ; inlets (22) for slow pulsing signals coming from counters controlled by magnet and Reed's tube ; inlets for signals of a hit or miss type and inlets for analogic signals.

4. Device according to claim 3, characterised in that it comprises an inlet (22) for rapid pulsing signals and an inlet (22) for slow pulsing signals, these inlets being connected by a frequency divider (30).

5. Device according to any one of claims 1 to 4, characterised in that it comprises an outlet (28) for the switching of an external power supply, this outlet being connected by addressable flip-flops to the central processing unit (10).

6. Device according to any one of claims 1 to 5 characterised in that it comprises a clock (41,42) for the scanning of the inlets.

7. Process for using the device according to any one of claims 1 to 6, characterised in that, in position, the portable and removable analyser (4) is connected to said meter (1) with a transmitter head, that it is disconnected after a predetermined flow analysis period and that it is transported to a processing site where it is connected to a microprocessor (6).

**Patentansprüche**

1. Vorrichtung zur kontinuierliichen Analyse des Durchsatzes eines fließenden Mediums unter Anwendung eines einen Sendekopf aufweisenden Zählers (1), dessen Signale zu jedem Moment dem Durchsatz entsprechen, dadurch gekennzeichnet, daß sie einen Analysator (4) für den Durchsatz des fließenden Mediums, der tragbar und autonom ist und der mit einer mit einem Mikroprozessor bestückten, zentralen Verarbeitungseinheit (10) ausgestattet ist, die mit einem Programmspeicher (12) und einem RAM-Spelcher (13) verbunden ist, um die von dem Zähler (1) her einkommenden Daten zu speichern, eine Leitung (3), um den Zähler (1) mit mindestens einem Eingang (21 bis 24) des Analysators (4) auswechselbar zu verbinden, einen Computer (6), der so eingerichtet ist, daß er die im RAM-Speicher (13) enthaltenen Daten verarbeiten kann und der an einem von dem Zähler (1) entfernten Ort angeordnet ist sowie eine Leitung (7, 8 und 9) umfaßt, um den Computer (6) mit mindestens einen Ausgang (25 bis 28) des Analysators (4) auswechselbar zu verbinden.

2. Vorrichtung nach Anspruch 1, dadurch gekennzeichnet, daß der Analysator (4) weiterhin mindestens eine Anzeigevorrichtung (43) umfaßt.

3. Vorrichtung nach Anspruch 1 oder nach Anspruch 2, dadurch gekennzeichnet, daß jeder der Eingänge (21 bis 24) ein Eingang (21) für schnelle, von stroboskopisch ansprechenden Zählern her ankommende Pulssignale, ein Eingang (22) für langsame, von einem Reedschalterzähler her ankommende Pulssignale, ein Eingang für "Alles oder Nichts"-Signale, oder ein Eingang für Analogsignale ist.

4. Vorrichtung nach Anspruch 3, dadurch gekennzeichnet, daß sie einen Eingang (21) für schnelle Pulssignale und einen Eingang (22) für langsame Pulssignale umfaßt, die miteinander über einen Frequenzteiler (30) verbunden sind.

5. Vorrichtung nach einem der Ansprüche 1 bis 4, dadurch gekennzeichnet, daß sie einen Eingang (28) zum Schalten einer externen Stromquelle umfaßt, wobei diese Stromequelle über adressierbare Flipflopvorrichtungen (40) mit der zentralen Verarbeitungseinheit (10) verbunden ist.

6. Vorrichtung nach einem der Ansprüche 1 bis 5, dadurch gekennzeichnet, daß sie eine Taktuhr (41 und 42) zur Überprüfung der Eingänge umfaßt.

7. Verfahren zur Anwendung der Vorrichtung nach einem der Ansprüche 1 bis 6, dadurch gekennzeichnet, daß man vor Ort den tragbaren und auswechselbaren Analysator (4) mit dem den Sendekopf aufweisenden Zähler (1) verbindet, daß man nach Ablauf einer vorbestimmten Zeit den Analysator dem Durchsatz entkoppelt und daß man ihn zu einer Überprüfungsstelle verbringt, wo man ihn mit einem Mikrocomputer (6) verbindet.

FIG. 1

FIG. 2